Europäisches Patentamt

European Patent Office

Office européen des brevets

(19)

(11) Veröffentlichungsnummer: **0 249 659 B1**

# EUROPÄISCHE PATENTSCHRIFT

(12)

(45) Veröffentlichungstag der Patentschrift: **20.03.91**

(21) Anmeldenummer: **86117704.6**

(22) Anmeldetag: **18.12.86**

(51) Int. Cl.⁵: **B25B 23/147**, B25B 21/00,
B23P 19/06

(54) Schraubspindel, Schraubmaschine und Verfahren zu ihrem Betrieb.

(30) Priorität: **14.06.86 DE 3620137**

(43) Veröffentlichungstag der Anmeldung:
**23.12.87 Patentblatt 87/52**

(45) Bekanntmachung des Hinweises auf die
Patenterteilung:
**20.03.91 Patentblatt 91/12**

(84) Benannte Vertragsstaaten:
**AT BE DE ES FR GB IT NL SE**

(56) Entgegenhaltungen:
**EP-A- 0 126 846**      **EP-A- 0 203 370**
**EP-A- 0 229 250**      **DE-A- 2 558 251**
**DE-A- 2 930 430**      **DE-A- 3 347 052**
**GB-A- 2 013 122**

**PATENT ABSTRACTS OF JAPAN, Band 9, Nr.
25 (M-355)[1748], 2. Februar 1985; & JP-A-59
169 736 (MATSUSHITA DENKI SANGYO K.K.)
25-09-1984**

**PATENT ABSTRACTS OF JAPAN, Band 10,
Nr. 249 (M-511)[2305], 27. August 1986; &
JP-A-61 79 530 (NIPPON KOKAN K.K.)
23-04-1986**

(73) Patentinhaber: **Wilhelm, Raimund
Kellersteige 25
W-7080 Aalen-Unterkochen(DE)**

(72) Erfinder: **Wilhelm, Raimund
Kellersteige 25
W-7080 Aalen-Unterkochen(DE)**

(74) Vertreter: **Schroeter, Helmut et al
Schroeter, Fleuchaus, Lehmann Wehser,
Holzer & Gallo Patentanwälte Wolfratshauser
Strasse 145 Postfach 71 03 50
W-8000 München 71(DE)**

## Beschreibung

Die Erfindung bezieht sich zunächst auf eine Schraubmaschine mit einer Spindel und den im Oberbegriff von Anspruch 1 genannten Bauteilen.

Schraubmaschinen mit Spindeln dieser Art werden in der maschinellen Fertigung, z.B. in der Automobilindustrie verwendet. Anwendungsbeispiele sind das Anschrauben eines Motorblocks an die tragenden Fahrzeugteile, das Aufschrauben des Zylinderkopfdeckels, das Zusammenschrauben der Bestandteile von Pleuellagern.

Zu einer effektiven Regelung eines Schraubvorganges ist die laufende Messung der Einschraubtiefe erwünscht. Mit Hilfe eines Tiefensensors ist es möglich, in der Anlegestufe kurz vor der Berührung von Schraubkopf oder Mutter mit der Unterlage die Drehzahl zu senken, so daß die Anlagestufe mit hoher Genauigkeit bei Erreichung des vorgegebenen Anlegemoments beendet werden kann. Eine Genauigkeit von 1% des Drehmoments sollte erzielbar sein.

Die Tiefenmessung dient einer weiteren Kontrolle: Ist die Bohrung für eine Schraube zu kurz oder reicht das Gewinde nicht weit genug in die Bohrung hinein (beides als "Sackloch" bezeichnet) oder befindet sich ein Fremdkörper in der Bohrung, so wird durch die Tiefenkontrolle und gleichzeitige Drehmomentkontrolle festgestellt, daß zwar das Anlegedrehmoment aber noch nicht die erforderliche Schraubtiefe erreicht wurden, und es kann ein Fehlersignal gegeben werden.

Aus der DE-OS 29 30 430 ist eine Schraubmaschine mit einer Spindel der genannten Art bekannt. Sie ist mit einem magnetischen Fühler (54) für die Winkelposition der Abtriebswelle (26) ausgerüstet. Eine Schraube wird eingeschraubt, bis ihr Kopf in Kontakt mit der Oberfläche des zugehörigen Werkstücks kommt. In einer zweiten Phase wird die Schraube mit einem vorbestimmten Drehmoment unter Überwachung durch den Winkelpositionsfühler festgezogen.

Eine Tiefenmessung ist durch die bekannte Spindel nicht direkt möglich. Vielmehr muß die Schraubtiefe auf der Anzahl von Umdrehungen unter Berückichtung der Gewindesteigung errechnet werden. Dies macht aber jeweils die Vorgabe von Parametern für die Gewindesteigungen erfarderlich.

Durch die vorliegende Erfindung soll eine Schraubmaschine geschaffen werden, bei deren Betrieb laufend die Einschraubtiefe selbst gemessen werden kann.

Diese Aufgabe wird gemäß Anspruch 1 gelöst.

Die Spindel ist hiernach mit einem Tiefensensor ausgestattet, der während des Schraubvorgangs Signale über die jeweils erreichte Schraubtiefe und/oder den noch vorhandenen Abstand zwischen Schraubkopf oder Mutter und der Unterlage erzeugt, die an eine Regelschaltung abgegeben werden können. Gemessen wird also die absolute Einschraubtiefe unabhängig von der Umdrehungszahl der Spindel, der Gewindesteigung und der Einschraubzeit.

## Weiterbildungen der Erfindung

Eine Weiterbildung der Erfindung nach Anspruch 2 betrifft eine Schraubmaschine, in der sich zusätzlich Längenmesser vorsehen lassen, die feststellen, ob ein herangefahrenes Werkstück, z.B. ein Motor-block, gegenüber einer die Spindel halternden Montageplatte eine Lage innerhalb zulässiger Toleranzen einnimmt, oder schief liegt oder unter einem zu kleinen oder zu großen Abstand angeordnet ist.

In Fertigungsstraßen der Automobilindustrie müssen nacheinander, je nach Lieferprogramm, Motoren mit Zylinderblöcken und/oder Zylinderköpfen aus Stahl und aus Aluminium verarbeitet werden, wozu dieselben Schraubmaschinen und -spindeln benutzt werden müssen. Die Schraubbolzen müssen aber je nach Material mit unterschiedlichen Anziehdrehmomenten angezogen werden. Der Bediener ist daher genötigt, die Schraubmaschinen jeweils auf die geforderten Drehmomente umzustellen. Außer dem Drehmoment müssen normalerweise auch anderen Daten, wie Getriebefaktor des Motor-Untersetzungsgetriebes, die maximale Motordrehzahl und die Winkelauflösung eingegeben werden.

Wesentlich für das Verschrauben von Stahl oder Aluminium ist unter anderem die Motordrehzahl, da bei beiden Materialien unterschiedliche Reibungswerte auftreten. Stahl hat eine wesentlich rauhere Überfläche, so daß für Stahl niedrigere Drehzahlen angewandt werden müssen als für Aluminium, damit ist nicht zu Wärmeentwicklungen und den oben erwähnten Kaltverschweißungen kommt. Andererseits sollte zur Zeitsparnis Aluminium mit der dafür zulässigen höheren Drehzahl verschraubt werden.

Die für einen bestimmten Schraubvorgant jeweils erforderlichen Daten sind in Datenblättern enthalten. Es müssen die korrekten Datenblätter herausgesucht und die Daten von Hand eingegeben werden, was, abgesehen von dem Arbeitsaufwand, das Risiko falscher Eingaben und damit schlechter (zu loser oder zu fester und verschweißter) Verschraubungen mit sich bringt.

EP 0 249 659 B1

Hinzu kommt, daß äußerlich gleich aussehende Spindeln unterschiedliche Untersetzungsgetriebe haben können, ohne daß dies immer eindeutig auf den Spindeln angegeben ist.

Durch eine Weiterbildung der Erfindung nach Anspruch 3 sollen unter Verwendung einer Schraubmaschine nach Anspruch 1 auch das Schraubdrehmoment und die Drehzahl erfaßt werden. Die drei entsprechenden Meßdaten sollen nach Art einer echten Regelung zum Steuern des Schraubvorgangs verwendet werden, so daß einerseits der Schraubvorgang in sehr geringer Zeit durchgeführt werden kann, andererseits aber mit Sicherheit eine unzuträglich hohe Reibung zwischen den zu verschraubenden Teilen und damit Verschweißungen ("Kaltverschweißungen") vermieden werden.

Unter Berücksichtigung dieser laufend zur Verfügung stehenden Meßgrö-ßen ist es möglich, den Schraubvorgang optimal durchzuführen, wobei Schraube oder Mutter bis zu dem gewünschten Anziehdrehmoment angezogen weden, und die Verschraubung in der kürzestmöglichen Zeit, sowie ohne Beschädigungen durchgeführt werden.

Der Schraubvorgang wird in zwei Stufen durchgeführt, nämlich zuerst einer Anlegestufe, die beim Berühren von Schraubkopf oder Mutter mit ihrer Unterlage beendet ist. Nach einer Verweilzeit beginnt eine zweite Stufe, die Anziehstufe, in der die Verschraubung bis zu einem vorgegebenen Drehmoment angezogen wird.

Für verschiedene Schraubvorgänge (verschiedene Materialien der zu verschraubenden Teile sowie unterschiedliche Längen und Dicken der Schrauben) müssen verschiedene Spindeln verwendet werden. Jede Spindel muß nach ihrem Einbau mit der Regelschaltung verbunden werden, und der Regelschaltung müssen auf irgendeine Weise die Parameter der Spindel und ihres Antriebs mitgeteilt werden. Damit dies nicht von Hand geschehen muß, was Zeitaufwand bedingt und eine fehlerquelle darstellt, kann nach Anspruch 3 ein elektronischer Speicherbaustein vorgesehen sein, der in der Spindel selbst untergebracht ist und der beim Anschließen an die Regelschaltung diese mit den notwendigen Daten zu ihrer Einstellung beliefert.

Nach Anspruch 4 läßt sich erreichen, daß der elektronische Speicherbaustein, der die Parameter der Spindel, ihres Antriebes und der Sensoren enthält, beim Anschließen einer Spindel an die Regelschaltung von sich aus, und zwar über den Drehmomentsensor der Spindel, eine Impulsfolge an die Regelschaltung abgibt, die alle erforderlichen Parameter in die Regelschaltung einspeist, wodurch diese der Spindel angepaßt wird.

Die Erfindung betrifft auch ein Verfahren zum Betreiben der Schraubmaschine. So kann nach Anspruch 5 der Schraubvorgang in zwei durch eine Verweilzeit getrennte Verfahrensstufen, nämlich der Anlegestufe und der Anziehstufe durchgeführt werden, wobei jede dieser Stufen bei Erreichen eines vorbestimmten Abschaltwertes, nämlich eines Drehmoments oder eines Motorstromes, beendet werden kann. Hierbei läßt sich in der Anlegestufe unter Tiefenmessung die Schraubdrehzahl bei der Annäherung an den Anlegezustand auf einen zulässigen Endwert herunterregeln, der ein Abschalten ohne Gefärdung der verschraubten Teile gestattet.

Nach Anspruch 6 läßt sich in beiden Stufen die Schraubdrehzahl $\underline{n}$ unter dem Einfluß des jeweils gemessenen Schraubdrehmoments M nach einer recht einfachen Formel $\overline{s}$teuern, nach der mit zunehmendem Schraubdrehmoment die Drehzahl herabgesetzt wird. Dadurch werden die oben beschriebenen Schäden beim Anlegen oder Festziehen mit Sicherheit ausgeschlossen.

Nach Anspruch 7 kann als Regelkriterium anstelle des Schraubdrehmoments der Motorstrom-Istwert I herangezogen werden.

Ausführungsbeispiele der Erfindung werden im folgenden anhand der Zeichnungen beschrieben.

Figur 1    zeigt in Seitenansicht einen Teil einer Schraubmaschine mit einer Spindel nach der Erfindung.

Figur 2    zeigt eine Schaltung mit einem Speicherbaustein und dient zum Einspeichern von Einstelldaten indie Regelschaltung.

Figur 3    zeigt den zeitlichen Verlauf eines Clock-Eingangssignals für den Speicherbaustein.

Figur 4    zeigt den Verlauf eines typischen Ausgangssignals des Speicherbausteins.

Figur 5    zeigt den zeitlichen Verlauf des Schraubdrehmoments M in der Anlege- und der Anziehstufe.

Figur 6    zeigt entsprechend den Verlauf der Motordrehzahl n.

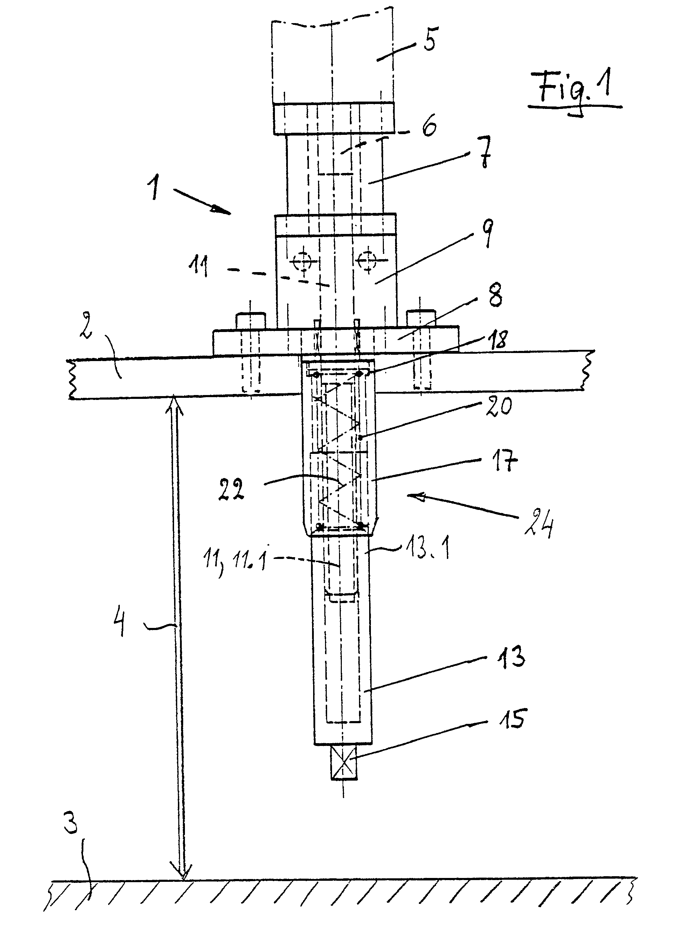

Figur 1 zeigt eine Ausführungsform einer Schraubmaschine mit einer Spindel 1, die in bekannter Weise an einer Montageplatte 2 befestigt ist und mit dieser lotrecht gegenüber einem Werkstück 3, z. B. dem Zylinderkopfdeckel eines Motorblocks lotrecht bewegt werden kann.

Zwischen der Montageplatte 2 und dem Werkstück 3 ist mindestens ein (hier nur schematisch dargestellter) handelsüblicher Längenmesser 4 angeordnet, der als Tiefenmesser fungiert und den Abstand zwischen der Montageplatte 2 und der Oberfläche des Werkstückes 3 ermittelt. Der Tiefenmesser kann rein mechanisch arbeiten oder mit Wellen, z. B. Radar oder Ultralschall. Vorzugsweise sind im Kranz um die Achse der Spindel 1 drei derartige Längenmesser angeordnet, und zwar unter gegenseitigen Winkelabstän-

3

den von 120°. Hierdurch kann nicht nur der Abstand zwischen Montageplatte und Werkstück festgestellt werden, sondern auch eine etwaige Schiefstellung des Werkstücks. Diese Angaben sind wesentlich für eine Kontrolle der laufenden Tiefenmessung durch die Spindel 1 selbst.

Die Spindel 1 wird durch einen hier nicht dargestellten bürstenlosen Motor über ein Untersetzungsgetriebe 5 angetrieben, das nur schematisch und teilweise dargestellt ist. Das Untersetzungsgetriebe hat ein konstantes Untersetzungsverhältnis, ist also nicht auf eine abweichende Abtriebsdrehzahl umschaltbar. Für jede Spindel sind ein bestimmter Motor und ein bestimmtes Untersetzungsgetriebe vorgesehen. Beide sind passend insbesondere zum Durchmesser der Schraube oder Mutter gewählt. Die Abtriebswelle 6 des Untersetzungsgetriebes ist drehfest mit dem Eingang eines Drehmomentsensors 7 verbunden, der üblicherweise auch als "Kraftmeßdose" oder "Kraftmeßflansch" bezeichnet wird. Der Drehmomentsensor dient zur Messung des bei einem Schraubvorgang vom Motor auf Spindel und Schraube oder Mutter übertragenen Drehmoments.

Ein Flansch 8 dient zur Befestigung der Spindel an der Montageplatte 2, die, z. B. durch einen Schwenkarm, in Gebrauchslage gebracht werden kann. Der Flansch 8 trägt ein Lagergehäuse 9, in dem die Antriebswelle 11 der Spindel drehbar gelagert ist. Die Antriebswelle hat unterhalb des Flansches 8 achsparallele Nuten und Rippen und trägt in axialer Richtung verschiebbar eine rohrförmige Abtriebswelle 13 mit gleichartigen Nuten und Rippen. Das das Drehmoment aufnehmende Ende, das Aufnahmeende 13.1 der Abtriebswelle 13 ist also nach Art einer Vielkeilnabe über das das Drehmoment abgebende Ende, das Abgabeende 11.1 der Antriebswelle 11 gesteckt. Die Abtriebswelle ist unten geschlossen und trägt einen Vierkant 15 od. dgl. zum Aufstecken eines Schraubwerkzeuges, insbesondere Schraubenschlüssels, der dann auf den Schraubenkopf oder die Mutter gesteckt wird. (Schraubenschlüssel und Schraubenkopf oder Mutter wurden nicht dargestellt.)

Vom Flansch 8 nach unten in Figur 1 ragt eine Schutzhülse 17, die auf einen Gewindestutzen des Flansches 8 geschraubt ist, also abnehmbar ist. Die Schutzhülse enthält eine Spule 20. Die hohle Abtriebswelle 13, die aus ferromagnetischem Material, insbesondere Werkzeugstahl, besteht, stellt einen Spulenkern dar. Die Spule 20 wird umgeben von einer Schraubenfeder 22, die bestrebt ist, die Abtriebswelle aus der Schutzhülse 17 (bis zu einem nicht dargestellten Endanschlag) nach unten zu drücken. Auf diese Weise wird ein Tiefensensor gebildet, der hier als Ganzes mit 24 bezeichnet ist. In der dargestellten Lage taucht die Abtriebswelle 13 etwa zur Hälfte in die Spule 20 ein, was einer bestimmten Induktivität der Spule entspricht. Durch Änderung der Eindrücktiefe (also Hochschieben oder Herunterdrücken der Abtriebswelle 13) wird die Induktivität der Spule geändert.

In Figur 1 nicht dargestellte Leitungen führen die sich ergebenden Meßdaten, nämlich Induktivität der Spule als Parameter für eine Schraubtiefe und das Drehmoment laufend einer nicht dargestellten Regelschaltung zu.

Figur 2 zeigt in einer Prinzipschaltung eine Brücke 26, die aus vier Dehnungsmeßstreifen 28a bis 28d aufgebaut ist. Die Dehnungsmeßstreifen sind im Drehmomentsensor 7 in an sich bekannter Weise so angeordnet, daß sich ihre Wirkungen gegenseitig erhöhen, indem jeweils zwei auf Zug und gegensinnig geschaltete auf Druck beansprucht werden. Anstelle von vier können auch nur zwei Dehnungsmeßstreifen und zwei Festwiderstände in an sich bekannter Weise verwendet werden. Punkte 32 und 33 der Brücke liegen an einer Versorgungsgleichspannung. Punkte 30 und 31 stellen den Brückenausgang dar, von dem ein Kontrollsignal an die nicht dargestellte Regelschaltung abgegeben wird. Soweit bisher beschrieben, dient diese Schaltung zur Übertragung des jeweiligen Drehmoments an die Regelschaltung.

Mit der Regelschaltung ist ein nicht dargestellter Drehzahlsensor verbunden, der zum Messen der Motor- oder Spindeldrehzahl dient.

Außerdem soll diese Schaltung aber zur Übertragung von Parametern dienen, die für die Grundeinstellung der Regelschaltung, passend zu der jeweiligen Spindel und ihrem Antrieb erforderlich sind.

Alle erforderlichen Parameter sind in einem Speicherbaustein 35 gespeichert, insbesondere einem Halbleiterbaustein. Der Speicherbaustein ist ein programmier- und lesbarer Halbleiterspeicher. Die in ihn enthaltene Information wird in serieller Datenübertragung ausgelesen.

Dem Dehnungsmeßstreifen 28a ist über einen elektronischen Schalter 37 (hier ein NPN-Transistor) ein Widerstand 38 parallelgeschaltet. Die Basis des Transistors ist mit einem Ausgang 40 des Speicherbausteins 35 verbunden. Der Speicherbaustein hat einen Clock-Eingang 42.

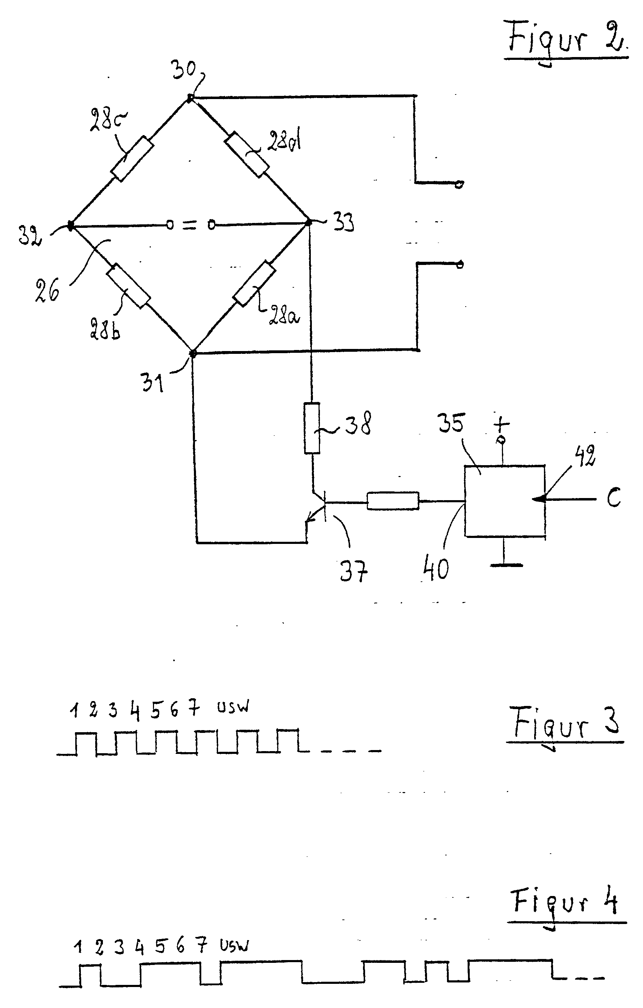

Figur 3 zeigt eine zeitliche Folge von Clock-Signalen, die dem Clock-Eingang 42 zugeführt werden. Entsprechend den im Speicherbaustein 35 gespeicherten Daten ergibt sich an dessen Ausgang 40 eine Impulsfolge, von der Figur 4 ein Beispiel zeigt. Je nach den am Ausgang 40 und damit am Kollektor des Transistors 37 auftretenden Signalen wird abwechselnd der Widerstand 38 zum Dehnungsmeßstreifen 28a parallel geschaltet oder die Parallelschaltung unterbrochen. Die Brücke wird also im Rhythmus der Ausgangssignale des Speicherbausteins verstimmt. Damit überlagert sich dem von der Brücke abzugeben-

4

den Drehmomentsignal unter dem Einfluß der Clock-Signale eine Folge von Signalen, die Angaben über die wesentlichen Parameter enthalten.

In dem Speicherbaustein 35 können für eine bestimmte Spindel, die mit einem bestimmten Drehmomentsensor ausgerüstet und mit einem bestimmten Motor und Untersetzungsgetriebe versehen ist, folgende Parameter gespeichert sein:

Motor:            Maximale Drehzahl und

                  Maximale Stromaufnahme


Getriebe:         Quotient der Getriebeuntersetzung


Drehmomentsensor:  Nenngröße in Nm
(Kraftdose)        Empfindlichkeit in mV/V


Tiefensensor:     Tiefenmaß in mm/V


Gesamtwirkungsgrad

der Spindel:      Verhältnis der zugeführten zur abgegebenen Leistung


In der Regelschaltung werden aus den vom Speicherbaustein her eingelesenen Werten folgende Werte berechnet, die später bei der Regelung der Schraubvorgänge verwendet werden:

Maximale Drehzahl der Abtriebswelle als Quotient der maximalen Motordrehzahl und des Getriebefaktors und der Getriebeuntersetzung;

Winkelauflösung als Impulse/Grad der Kommutierung des bürstenlosen Motors, multipliziert mit der Getriebeuntersetzung;

Der Wirkungsgrad W.

Die Kommutierungsimpulse werden vom Motor direkt abgegriffen. Sie können z. B. eine Auflösung von $7,5^{\circ}$/Impuls haben.

Während eines Schraubvorganges muß der Wirkungsgrad W überwacht werden, nämlich der Quotient der abgeführten zur zugeführten Leistung

$$W = P_{ab} : P_{zu} \qquad\qquad (1)$$

Darin sind $P_{zu} = U \cdot I$, nämlich das Produkt aus dem vom Motor aufgenommenen Strom bei seiner Eingangsspannung.

Die abgeführte Leistung $P_{ab}$ ist eine Funktion f des jeweiligen Schraubdrehmoments und der jeweiligen Schraubdrehzahl

$$P_{ab} = f (M \cdot n) \qquad\qquad (2)$$

Wird bei einem Schraubvorgang der Wirkungsgrad W kleiner als der nach Formel 1 errechnete vorgegebene Wirkungsgrad, so ist dies ein Anzeichen für erhöhte Reibung innerhalb der Lager der Spindel und kündigt einen möglichen Ausfall der Spindel an. Es wird ein Warnsignal gebildet.

Eine Signalfolge, die diese Parameter enthält, wird auf die Regelschaltung nur zu Anfang übertragen, nämlich nach dem Einbau der Spindel und auf Anfrage der Regelschaltung. Die in der Regelschaltung dann gespeicherten Parameter dienen als Grundlage für die Regelung bei allen gleichartigen Schraubvorgängen derselben Spindel.

Wird die Spindel ausgetauscht und/oder werden die Daten des Schraubvorgangs geändert, wie Material, Länge und Durchmesser der Schraube, so müssen dafür zusätzliche Daten eingegeben werden, die sich aber nicht in dem Speicherbaustein befinden. Der Speicherbaustein ist in der Spindel selbst untergebracht und enthält nur die für die Spindel und ihren Antrieb typischen Parameter.

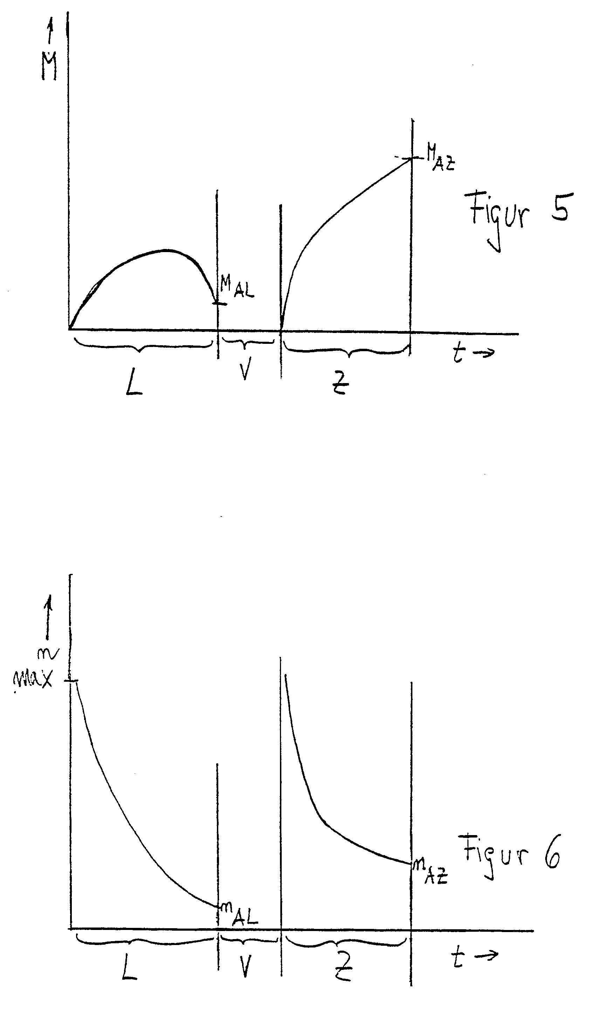

Die Figuren 5 und 6 zeigen den zeitlichen Verlauf des Schraubdrehmoments M bzw. der Schraubdrehzahl n bei einem typischen Schraubvorgang. Wie erwähnt, wird der Schraubvorgang in zwei zeitlichen Abschnitten durchgeführt, der Anlegestufe L und der Anziehstufe Z, die durch eine Verweilzeit V voneinander getrennt sind.

Die Anlegestufe beginnt mit maximaler Drehzahl $n_{max}$ und einem zunächst ansteigenden Schraubdrehmoment M. Während z. B. die Schraube eingedreht wird, bewegt sich (Figur 1) unter dem Einfluß der Schraubenfeder 22 die Abtriebswelle 13 gegenüber der Schutzhülse 17 abwärts, wodurch die Induktivität der Spule sinkt. Das von der Spule abgegebene Signal wird in ein Maß für die Schraubtiefe verwandelt und mit einem vorher eingestellten Endwert der Schraubtiefe verglichen. Der Endwert entspricht dem Anlegen des Schraubenkopfes oder der Mutter an die Unterlage. Unter dem Einfluß des Tiefensignals wird das Schraubdrehmoment M heruntergeregelt, so daß es am Ende der Anlegestufe L einen endlichen Wert $M_{AL}$ erreicht.

Damit wird zwangsläufig auch die Drehzahl n heruntergeregelt, und zwar nach der Formel

$$n = n_{max} - \frac{n_{max} - n_{min}}{M_A} \cdot M , \qquad (3)$$

worin bedeuten:

$n_{max}$     maximale Schraubdrehzahl in der Anlege- bzw. Anziehstufe
$n_{min}$     minimale Schraubdrehzahl in der Anlege- bzw. Anziehstufe
$M_A$     Abschalt-Schraubdrehmoment am Ende der Anlege- bzw. Anziehstufe

Formel 3 bedeutet vereinfacht:

$$n = n_{max} - k \cdot m \qquad (4)$$

worin k eine Konstante bedeutet.

Die Drehzahl n wird also von ihrem Maximalwert her heruntergeregelt, und zwar wird sie mit zunehmendem Drehmoment kleiner, bis sie einen Endwert erreicht, der größer ist als null.

Die Formel 1 gilt sowohl für die Anlegestufe L wie auch für die Anziehstufe Z. Der Wert $M_A$ bedeutet das Schraubdrehmoment, das am Ende der Anlege- bzw. Anziehstufe erreicht werden soll.

Auf die Anlegestufe folgt eine Verweilzeit, die sicherstellen soll, daß bei mehreren einzudrehenden Schrauben oder dergleichen in allen Fällen die Anlegestufe abgeschlossen ist. Sollte ein Schraubvorgang nicht durchführbar sein, z. B. weil ein Sackloch vorhanden ist, so kann nun der ganze Schraubvorgang abgebrochen oder nach Beseitigung eines Fehlers, z.B. Entfernung eines Fremdkörpers aus dem Schraubloch, für die eine Schraube wiederholt und dann für alle in der Anziehstufe fortgesetzt werden.

Bei einem Schraubvorgang wird ständig das Schraubdrehmoment ermittelt und in die Regelschaltung eingelesen. Sowohl für die Anlegestufe wie auch für die Anziehstufe wird je ein Abschalt-Schraubdrehmoment $M_A$ vorgegeben. Diese Abschalt-Schraubdrehmomente haben einen niedrigen Wert für die Anlegestufe und einen wesentlich höheren Wert für die Anziehstufe. Von der Regelschaltung wird zu jedem laufend gemessenen und eingelesenen Schraubdrehmoment nach Formel 3 die zugehörige Schraubdrehzahl eingeregelt.

In der Anlegestufe wird, wie Figur 6 zeigt und wie sich aus Formel 3 ergibt, die Drehzahl nicht bis auf Null sondern auf einen gefahrlosen Wert $n_{AL}$ heruntergefahren, der zu keinen mechanischen Beschädigungen führen kann, es aber gestattet, den Schraubvorgang in einer optimal kurzen Zeit durchzuführen.

In der Anziehstufe wird wiederum mit maximaler Drehzahl $n_{max}$ begonnen. Die Drehzahl wird wiederum anhand der Formel 3, hier auf einen Endwert $n_{AZ}$, heruntergeregelt. Das Schraubdrehmoment wird bis zu einem vorbestimmten Endwert $M_{AZ}$ hochgefahren, der sich aus Formel 3 ergibt.

In beiden Stufen wird beim Erreichen des vorgegebenen Abschalt-Schraubdrehmoments $M_{AL}$ bzw. $M_{AZ}$ der Motor abgeschaltet.

Als Kriterium für die Regelung der Schraubdrehzahl kann anstelle des Schraubdrehmoments der Motor-Iststrom I herangezogen werden. Damit ergibt sich dann folgende Formel nach der geregelt wird:

6

$$n = n_{max} - \frac{n_{max} - n_{min}}{I_A} \cdot I , \tag{5}$$

worin bedeuten:

$n_{max}$     maximale Schraubdrehzahl in der Anlege- bzw. Anziehstufe

$n_{min}$     minimale Schraubdrehzahl in der Anlege- bzw. Anziehstufe

$I_A$     Abschalt-Motorstrom am Ende der Anlege- bzw. Anziehstufe

Auch für diesen Fall gelten die Kurvendarstellungen nach den Figuren 5 und 6, wobei lediglich auf der Ordinate der Figur 5 der Motorstrom anstelle des Schraubdrehmoments anzugeben ist.

## Ansprüche

1. Schraubmaschine mit einer Spindel (1), die
   a) eine Antriebswelle (11) und eine ihr gegenüber entgegen der Kraft einer Feder axial verschiebbare Abtriebswelle (13) aufweist, **gekennzeichnet** durch
   b) einen Tiefensensor (24) zum Messen der Einschraubtiefe, der auf folgende Weise gebildet ist:
   b1) das das Drehmoment abgebende Ende (11.1) der Antriebswelle (11) ist innerhalb des das Drehmoment aufnehmenden Endes (13.1) der Abtriebswelle (13) axial verschiebbar gelagert,
   b2) in einem Gehäuseteil (17) der Spindel, der zumindest Teile des Abgabeendes (11.1) und des Aufnahmeendes (13.1) umgibt, ist eine Spule (20) untergebracht, innerhalb derer das Aufnahmeende (13.1) unter Änderung der Induktivität der Spule verschiebbar ist.

2. Schraubmaschine nach Anspruch 1, dadurch **gekennzeichnet**, daß an einer Montageplatte (2), an der die Spindel (1) zu befestigen ist, neben der Spindel oder an zwei oder mehr Seiten der Spindel ein, zwei oder mehr an sich bekannte Längenmesser (4) so angeordnet sind, daß sie parallel zum Tiefensensor (24) die Entfernung(en) zwischen der Montageplatte (2) und einem Werkstück (3) messen, an dem der Schraubvorgang durchgeführt werden soll.

3. Schraubmaschine nach Anspruch 1, **gekennzeichnet** durch die Kombination mit folgenden zusätzlichen Merkmalen:
   a) ein Motor, (5),
   b) ein Drehmomentsensor (7), der zwischen dem Motor und der Antriebswelle (11) der Spindel angeordnet ist,
   c) eine Regelschaltung für den Schraubvorgang,
   d) ein mit der Regelschaltung verbundener Drehzahlsensor zum Messen der Motor- oder Spindeldrehzahl,
   e) ein elektronischer Speicherbaustein (35), in dem Parameter der Spindel, ihres Antiebes und der Sensoren gespeichert sind, it innerhalb der Schraubmaschine, insbesondere der Spindel, untergebracht,
   f) der Speicherbaustein ist über den Drehmomentsensor (7) an die Regelschaltung anschließbar.

4. Schraubmaschine nach Anspruch 3, **gekennzeichnet** durch folgende Merkmale:
   a) der Drehmomentsensor hat zwei oder insbesondere vier Dehnungsmeßstreifen (28a - d) in Brückenschaltung,
   b) die Größe des elektrischen Widerstandes eines der Zweige der Brücke ist über einen elektronischen Schalter (37), insbesondere durch Parallelschalten eines Festwiderstandes (38), willkürlich veränderbar, derart, daß sich dadurch ein von der Brücke erzeugtes und der Regelschaltung zur Übertragung von Einstelldaten zugeführtes Kontrollsignal ändert,
   c) zur Betätigung des elektronischen Schalters dient eine Impulsfolge, die der Speicherbaustein unter dem Einfluß von ihm zugeführten Taktimpulsen abgibt.

5. Verfahren zum Betrieb einer Schraubmaschine nach Anspruch 3, wobei der Schraubvorgang in zwei durch eine Verweilzeit getrennten Verfahrensstufen, der Anlegestufe und der Anziehstufe, durchgeführt wird, deren jede bei Erreichen eines für sie vorbestimmten Abschalt-Schraubdrehmoments ($M_{AL}$,$M_{AZ}$) oder Abschalt-Motorstromes ($I_{AL}$,$I_{AZ}$) beendet wird, wobei in der Anlegestufe, unter Steuerung durch den Tiefensensor die Schraubdrehzahl n von ihrem Anfangswert her bei Annäherung an den Anlegezustand, in dem der Schraubenkopf oder die Mutter die Unterlage berührt, auf einen Endwert (Abschalt-Schraubdrehzahl $n_{AL}$) gesenkt wird, der bei Erreichen des Abschalt-Schraubdrehmoments ($M_{AL}$) bzw. Abschalt-Motorstromes ($I_{AL}$) ein Anhalten ohne Überbeanspruchung gestattet.

6. Verfahren nach Anspruch 5, dadurch **gekennzeichnet**, daß die jeweilige Schraubdrehzahl n unter laufender Messung des jeweiligen Schraubdrehmoments M nach folgender Formel geregelt wird:

$$n = n_{max} - \frac{n_{max} - n_{min}}{M_A} \cdot M \, ,$$

worin bedeuten:

$n_{max}$ maximale Schraubdrehzahl in der Anlege- bzw. Anziehstufe
$n_{min}$ minimale Schraubdrehzahl in der Anlage- bzw. Anziehstufe
$M_A$ Abschalt-Schraubdrehmoment am Ende der Anlege- bzw. Anziehstufe

7. Verfahren nach Anspruch 5, dadurch **gekennzeichnet**, daß die jeweilige Schraubdrehzahl n unter laufender Messung des jeweiligen Motorstromes I nach folgender Formel geregelt wird:

$$n = n_{max} - \frac{n_{max} - n_{min}}{I_A} \cdot I \, ,$$

worin bedeuten:

$n_{max}$ maximale Schraubdrehzahl in der Anlege- bzw. Anziehstufe
$n_{min}$ minimale Schraubdrehzahl in der Anlegen bzw. Anziehstufe
$I_A$ Abschalt-Motorstrom am Ende der Anlege- bzw. Anziehstufe

## Claims

1. Screwing machine including a spindle (1) which has (a) a drive shaft (11) and a driven shaft (13) which is axially movable with respect to it against the force of a spring,
characterised by
(b) a depth sensor (24) for measuring the screwing-in depth which is constructed in the following manner:
b1) that end of the drive shaft (11.1) which delivers the torque is axially movably mounted within that end (13.1) of the driven shaft which receives the torque,
b2) accommodated in a housing portion (17) of the spindle, which surrounds at least portions of the delivery end (11.1) and of the receiving end (13.1), is a coil (20) within which the receiving end (13.1) is movable so as to change the inductance of the coil.

2. Screwing machine as claimed in claim 1, characterised in that one one, two or more length measuring devices (4) known per se are so arranged on a mounting plate (2), to which the spindle (1) is to be secured, adjacent the spindle or on two or more sides of the spindle that they measure the distance(s) parallel to the depth sensor (24) between the mounting plate (2) and a workpiece (3) on which the screwing process is to be performed.

3. Screwing machine as claimed in claim 1, characterised by the combination with the following additional features:
(a) a motor (5),

8

(b) a torque sensor (7) which is arranged between the motor and the drive shaft (11) of the spindle,
(c) a control circuit for the screwing process,
(d) a speed of rotation sensor connected to the control circuit for measuring the speed of rotation of the motor or spindle,
(e) an electronic storage unit (35) in which parameters of the spindle, its drive and the sensors are stored, is accommodated within the screwing machine, particularly the spindle,
(f) the storage unit is connectable via the torque sensor (7) to the control circuit.

4. Screwing machine as claimed in claim 3, characterised by the following features:
(a) the torque sensor has two or particularly four strain measuring strips (28a-d) in a bridge circuit,
(b) the magnitude of the electrical resistance of one of the branches of the bridge is arbitrarily variable by means of an electronic switch (37), particularly by parallel connecting a fixed resistance (38), in such a manner that a control signal which is produced by the bridge and supplied to the control circuit to transfer setting data, thereby varies,
(c) a pulse train, which is supplied by the storage unit under the influence of timing pulses supplied to it, serves to actuate the electronic switch.

5. Method of operating a screwing machine as claimed in claim 3 in which the screwing process is carried out in two separate method steps, the installation step and the tightening step, separated by a period of time, each of which is terminated when a switching-off screwing torque ($M_{AL}$, $M_{A2}$) or switching-off motor current ($I_{AL}$, $I_{AZ}$) predetermined for it is reached, whereby in the installation step the speed of rotation of screwing n is reduced under the control of the depth sensor from its initial value as the installed state is approached, in which the screw head or the nut contacts the material beneath it, to a final value (switching-off speed of rotation of screwing $n_{AL}$) which permits stopping when the switching-off screwing torque ($M_{AL}$) or switching-off motor current ($I_{AL}$) is reached without overstressing.

6. Method as claimed in claim 5, characterised in that the speed of rotation of screwing n is controlled in accordance with the following formula whilst continuously measuring the screwing torque M:

$$n = n_{max} - \frac{n_{max} - n_{min}}{M_A} \cdot M \, ,$$

wherein:
$n_{max}$ is the maximum speed of rotation of screwing in the installation or tightening step
$n_{min}$ is the minimum speed of rotation of screwing in the installation or tightening step
$M_A$ is the switching-off screwing torque at the end of the installation or tightening step.

7. Method as claimed in claim 5, characterised in that the speed of rotation of screwing n is controlled in accordance with the following formula whilst continuously measuring the motor current:

$$n = n_{max} - \frac{n_{max} - n_{min}}{I_A} \cdot I \, ,$$

wherein:
$n_{max}$ is the maximum speed of rotation of screwing in the installation or tightening step
$n_{min}$ is the minimum speed of rotation of screwing in the installation or tightening step
$I_A$ is the switching-off motor current at the end of the installation or tightening step.

**Revendications**

1. Machine de vissage comprenant une broche (1) qui :

a) comporte un arbre d'entraînement (11) et un arbre de sortie (13) qui peut être déplacé axialement par rapport à lui à l'encontre de la force d'un ressort,

caractérisée par :

b) un capteur de profondeur (24) qui est destiné à mesurer la profondeur de vissage et qui est constitué de la manière suivante :

b1) l'extrémité (11.1) de l'arbre d'entraînement (11) qui fournit le couple est montée, de manière coulissante dans le sens axial, à l'intérieur de l'extrémité (13.1) de l'arbre de sortie (13) qui reçoit le couple,

b2) dans une partie (17) du carter de la broche qui entoure au moins des parties de l'extrémité (11.1) qui fournit le couple et de l'extérmité (13.1) qui le reçoit est logée une bobine (20) à l'intérieur de laquelle l'extrémité (13.1) qui reçoit le couple peut être déplacée an modificant l'inductance de la bobine.

2. Machine de vissage selon la revendication 1, caractérisée par le fait que, sur une plaque de montage (2) sur laquelle la broche (1) doit être fixée, deux dispositifs de mesure de la longueur (4) ou plus, connus en eux-mêmes, sont disposés à côté de la broche ou sur deux côtés ou plus de la broche, de telle manière qu'ils mesurent, parallèlement au capteur de profondeur (24>) le ou les éloignements entre la plaque de montage (2) et une pièce (30 sur laquelle l'opération de vissage doit être exécutée.

3. Machine de vissage selon la revendication 1, caractérisée par la combinaison avec les caractéristiques supplémentaires suivantes :

a) un moteur (5),

b) un capteur de couple (7) qui est disposé entre le moteur et l'arbre d'entraînement (11) de la broche,

c) un circuit de régulation pour l'opération de vissage,

d) un capteur de vitesse de rotation relié au circuit de régulation pour mesurer la vitesse de rotation du moteur ou de la brocbe,

e) un composant électronique à mémoire (35) dans lequel sont mis en mémoire des paramètres de la broche, de son entraînement et des capteurs, est logé à l'intérieur de la machine de vissage, et en particulier de la broche,

f) le composant à mémoire peut être relié au circuit de régulation par l'intermédiaire du capteur de couple (7).

4. Machine de vissage selon la revendcation 3, caractérisée par les caractéristiques suivantes :

a) le capteur de couple comporte deux jauges extensométriques, ou en particulier quatre (28a - d), qui sont montées en pont,

b) la valeur de la résistance électrique de l'une des branches du pont peut être modifée arbitrairement par l'intermédiaire d'un interrupteur électronique (37), en particulier par branchement en parallèle d'une résistance fixe (38), de telle sorte que ceci modifie un signal de contrôle engendré par le pont et amené au circuit de régulation pour la transmission de données de réglage,

c) pour l'actionnement de l'interrupteur électronique, on utilise un train d'impulsions qui fournit le composant à mémoire sous l'influence d'impulsions d'horloge amenées à celui-ci.

5. Procédé pour le fonctionnement d'une machine de vissage selon la revendication 3, dans lequel l'opération de vissage est exécutée en deux étapes de procédé séparées par un temps d'arrêt, à savoir la phase de pose et la phase de serrage, dont chacune est terminée lorsqu'est atteint un couple de vissage d'arrêt ($M_{AL}$,$M_{AZ}$) ou un courant d'arrêt du moteur ($I_{AL}$,$I_{AZ}$) prédéterminé pour elle, et dans lequel, dans la phase de pose, et sous la commande du capteur de profondeur, la vitesse de rotation de vissage n est abaissée depuis sa valeur initiale, lorsque l'on s'approche de l'etat posé dans lequel la tête de vis ou l'écrou touche le substrat, jusqu'à une valeur finale (vitesse de rotation de vissage d'arrêt $n_{AL}$) qui autorise un arrêt sans surcharge lorsqu'est atteint le couple de vissage d'arrêt ($M_{AL}$) ou le courant d'arrêt du moteur ($I_{AL}$) respectivement.

6. Procédé selon la revendication 5, caractérisé par le fait que la vitesse de rotation de vissage n est régulée à chaque fois avec une mesure continue du couple de vissage M correspondant, selon la formule suivante :

$$n = n_{max} - \frac{n_{max} - n_{min}}{M_A} \cdot M$$

où :

$n_{max}$     est la vitesse de rotation maximale de vissage dans la phase de pose ou de serrage, respectivement,

$n_{min}$     est la vitesse de rotation minimale de vissage dans la phase de pose ou de serrage, respectivement,

$M_A$     est le couple de vissage d'arrêt à la fin de la phase de pose ou de serrage, respectivement.

7. Procédé selon la revendicaton 5, caractérisé par la fait que la vitesse de rotation de vissage $n$ est régulée à chaque fois, avec une mesure continue du courant du moteur I correspondant, selon la formule suivante :

$$n = n_{max} - \frac{n_{max} - n_{min}}{I_A} \cdot I$$

où :

$n_{max}$     est la vitesse de rotation maximale de vissage dans la phase de pose ou de serrage, respectivement,

$n_{min}$     est la vitesse de rotation minimale de vissage dans la phase de pose ou de serrage, respectivement,

$I_A$     est le courant d'arrêt du moteur à la fin de la phase de pose ou de serrage, respectivement.

Fig. 1

Figur 2

Figur 3

1 2 3 4 5 6 7 usw

Figur 4

1 2 3 4 5 6 7 usw

Figur 5

Figur 6